# EUROPEAN PATENT APPLICATION

(11) **EP 4 439 777 A1**
(43) Date of publication of application: **02.10.2024**
(21) Application number: 24155988.9
(22) Date of filing: 06.02.2024
(51) Int. Cl.: H01M 10/42, H01M 10/48, H01M 50/213, H01M 50/262, H01M 50/507

(54) **BATTERY MODULE WITH TEMPERATURE SENSING STRUCTURE**

(30) Priority: 10.02.2023 US 202363444575 P
(71) Applicant: Delta Electronics Inc., Taoyuan City 320023 (TW)
(72) Inventor: PENG, Yen-Kai, 320023 Taoyuan City (TW); LIN, Mu-Min, 320023 Taoyuan City (TW)
(74) Representative: 2K Patentanwälte Blasberg Kewitz & Reichel

(57) **Abstract**

A battery module includes battery cells (10), a housing (20) and a temperature-sensing line (30). The housing (20) includes a base (21) and a cover (22). A hollow portion (200) is defined when the base (21) is combined with the cover (22). The battery cells (10) are fixed by the base (21) and the cover (22), and a part of the outer periphery of each of the plurality of battery cells (10) is exposed from the hollow portion (200). The temperature-sensing line (30) includes two conductive wires (31) and an insulating layer (32) disposed between the conductive wires (31). The temperature-sensing line (30) contacts the outer periphery of each of the battery cells (10) exposed from the hollow portion (200). When the temperature of any battery cell (10) is increased to a predetermined temperature and heat is transmitted to the temperature-sensing line (30), the insulating layer (32) is melted at the predetermined temperature to make the conductive wires (31) conduct with each other and generate a warning signal.

## Description

### BACKGROUND OF THE DISCLOSURE

### Technical Field

The technical field relates to a battery device, and more particularly relates to a battery module with a temperature sensing structure.

### Description of Related Art

A battery system is structured with battery modules which have a plurality of battery cells, and the power outputted for use is provided through electrical connections. Most battery modules are equipped with a temperature sensing device to monitor and protect the battery module to prevent damage caused by high temperatures within the battery system.

Furthermore, there are numerous battery cells in the battery module. As it is difficult to monitor the temperature of each of the battery cells, it is necessary to increase the number of temperature sensors to monitor the temperature of each of the battery cells, and additional signal lines are also required.

In view of the above drawbacks, the inventor proposes this disclosure based on his expert knowledge and elaborate researches in order to solve the problems of related art.

### SUMMARY OF THE DISCLOSURE

This disclosure discloses a battery module with a simplified temperature sensing structure to achieve the purpose of monitoring the temperature of all the battery cells.

This disclosure describes a battery module including a plurality of battery cells, a housing and a temperature-sensing line. The housing includes a base and a cover. A hollow portion is defined when the base is combined with the cover. The battery cells are fixed by the base and the cover, and a part of the outer periphery of each of the battery cells is exposed from the hollow portion. The temperature-sensing line includes a pair of conductive wires and an insulating layer disposed between the pair of conductive wires. The temperature-sensing line contacts the outer periphery of each of the battery cells exposed from the hollow portion. When the temperature of at least one of the battery cells is increased to a predetermined temperature and heat is transmitted to the temperature-sensing line, the insulating layer is melted at the predetermined temperature to make the pair of conductive wires conduct with each other and generate a warning signal.

In one embodiment, the battery module further includes a control module, the control module includes a control board and an alarm electrically connected to the control board, the ends of the pair of conductive wires are connected to the control board, respectively, and the alarm generates the warning signal.

In one embodiment, the battery module further includes a plurality of busbars electrically connected with the battery cells, the battery cells are arranged in a matrix manner, the plurality of busbars includes a plurality of first electrode plates and a plurality of second electrode plates, and the first electrode plates and the second electrode plates are respectively arranged on two sides of the battery cells opposite to each other.

In one embodiment, the housing includes a plurality of fixing structures securing the temperature-sensing line, the fixing structures include a plurality of lower fixing structure located on the base and a plurality of upper fixing structure located on the cover, the lower fixing structures extend from the base to the hollow portion, and the upper fixing structures extend from the cover to the hollow portion.

In one embodiment, the lower fixing structure includes a lower extension arm extending from the base and a lower block located on the lower extension arm, a lower groove is defined on the lower block engaged with the temperature-sensing line, the upper fixing structure includes an upper extension arm extending from the cover and an upper block located on the upper extension arm, and an upper groove is defined on the upper block engaged with the temperature-sensing line.

In one embodiment, the lower fixing structure is arranged corresponding to the upper fixing structure to be engaged with the lower and upper sides of the temperature-sensing line.

In one embodiment, the lower fixing structure and the upper fixing structure are arranged in a staggered manner to be separately engaged with the lower and upper sides of the temperature-sensing line.

In one embodiment, the cover includes a cover plate, a pair of upper side-plates and an upper positioning plate, an upper slot is defined on the cover plate, the pair of upper side-plates are located on two sides of the cover opposite to each other, the upper positioning plate is located between the cover plate and the pair of upper side-plates with its outline corresponding to that of the batter cells. The base includes a base plate, a pair of lower side-plates and a lower positioning plate. A lower slot is defined on the base plate, the pair of lower side-plates are located on two sides of the base opposite to each other, and the lower positioning plate is located between the base plate and the pair of lower side-plates with its outline corresponding to that of the batter cells.

In one embodiment, the lower positioning plate includes a plurality of lower arc plates corresponding to positions of the battery cells, a lower notch is defined on the upper edge of each of the lower arc plates. The upper positioning plate includes a plurality of upper arc plates corresponding to positions of the battery cells, an upper notch is defined on the upper edge of each of the upper arc plates, the hollow portion is defined between the lower notch and the upper notch when the base and the cover are combined.

In one embodiment, the temperature-sensing line further includes a protection sheath, the pair of conductive wires is inserted in the protection sheath, and each of the pair of conductive wires is covered with the insulating layer and contacts the protection sheath through the insulating layer.

In one embodiment, the insulating layer is made of thermosensitive polymer, and the conductive wire is made of copper.

In one embodiment, the battery module further includes a plurality of locking parts, wherein the base and the cover are combined through the locking parts.

In one embodiment, a plurality of locking holes are defined separately on the base, a plurality of through holes are defined separately on the cover, and the locking parts are inserted in the through holes and combined in the locking holes.

In comparison with the related art, the battery cells of the battery module of this disclosure are positioned (fixed) between the base and the cover. A hollow portion is defined when the base is combined with the cover, and a part of the outer periphery of the plurality of battery cells is exposed from the hollow portion. Furthermore, the temperature-sensing line is positioned within the hollow portion and in contacts with each of the battery cells. Accordingly, when the temperature of the battery cell is increased to a predetermined temperature and heat is transmitted to the temperature-sensing line, the insulating layer is melted at the predetermined temperature to make the pair of conductive wires conduct with each other and generate a warning signal to the control board. Consequently, a warning signal is triggered, alerting the user that the battery module is in a high temperature state and needs appropriate measures to protect the battery cells. Additionally, this disclosure only utilizes one temperature-sensing line to monitor all battery cells. When the temperature of any battery cell exceeds the predetermined threshold temperature, a conduction signal is sent to the control board. Since the temperature-sensing line is not required to be set as multiple signal lines, the goal of reducing the installation cost and space of the battery temperature sensing device is achieved.

### BRIEF DESCRIPTION OF THE DRAWINGS

The features of the disclosure believed to be novel are set forth with particularity in the appended claims. The disclosure itself, however, may be best understood by reference to the following detailed description of the disclosure, which describes a number of exemplary embodiments of the disclosure, taken in conjunction with the accompanying drawings, in which:
FIG. 1 is a perspective schematic view of the battery module with temperature sensing structures in this disclosure;
FIG. 2 is a cross-sectional view of the temperature-sensing line in this disclosure;
FIG. 3 to FIG. 5 are partially enlarged schematic views of the battery module with temperature sensing structures in this disclosure;
FIG. 6 is a perspective exploded schematic view of the battery module with temperature sensing structures in this disclosure;
FIG. 7 and FIG. 8 are partially enlarged schematic views of the battery module with temperature sensing structures in this disclosure; and
FIG. 9 is a perspective exploded schematic view of the housing in this disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

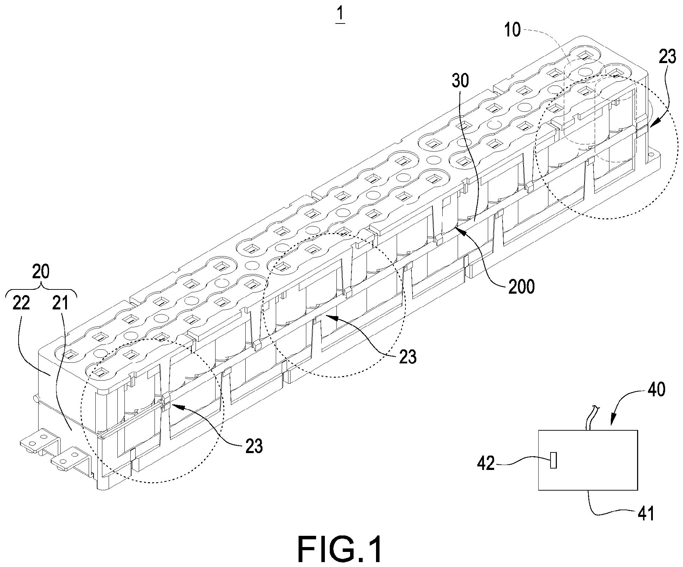

Please refer to FIG. 1, which depicts a perspective schematic view of the battery module with temperature sensing structures in this disclosure. This disclosure discloses a battery module 1 with a temperature sensing structure, including a plurality of battery cells 10, a housing 20, and a temperature-sensing line 30. The housing 20 is used to accommodate the battery cells 10 and includes a base 21 and a cover 22. A hollow portion 200 is defined when the base 21 is combined with the cover 22. The temperature-sensing line 30 is disposed within the hollow portion 200, and a part of the outer periphery of each of the battery cells 10 is exposed from the hollow portion 200. The temperature-sensing line 30 in contacts with the outer periphery of each of the battery cells 10 exposed from the hollow portion 200.

The battery module 1 further includes a control module 40. The control module 40 includes a control board 41 and an alarm 42 electrically connected to the control board 41. The control module 40 may be configured as a battery management system (BMS) or other similar control systems. One end of the temperature-sensing line 30 is connected to the control board 41. The control board 41 has the capability of triggering the alarm 42 to generate a warning signal.

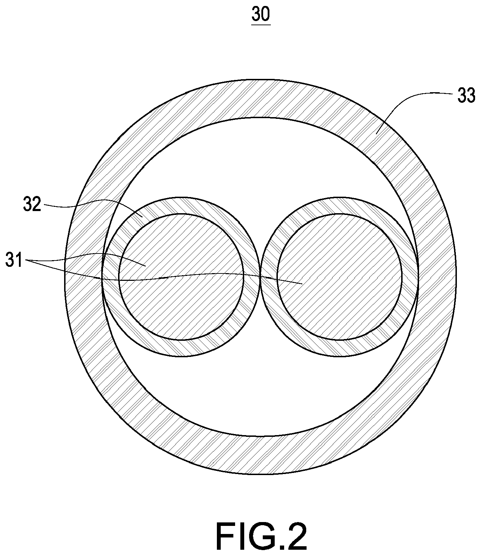

Please further refer to FIG. 2, which depicts a cross-sectional view of the temperature-sensing line in this disclosure. The temperature-sensing line 30 includes a pair of conductive wires 31, an insulating layer 32 separating the pair of conductive wires 31, and a protection sheath 33. The conductive wire 31 is a copper wire. The insulating layer 32 is made of thermosensitive polymer that may be melted within a certain temperature range. The protection sheath 33 is made of insulating material. The pair of conductive wires 31 is inserted in the protection sheath 33. In this embodiment, each of the pair of wires 31 is covered with the insulating layer 32 and in contacts with the protection sheath 33 through the insulating layer 32. Additionally, two conductive wires 31 may not be in direct contact with each other due to the presence of two insulating layers 32.

Therefore, when the temperature of the temperature-sensing wire 30 is within the normal range, the insulating layer 32 prevents the conductive wires 31 from contacting with each other to ensure they remain disconnected. The control board 41 is designed not to trigger the alarm 42 when two conductive wires 31 are not connected to each other. However, when the temperature of the temperature-sensing line 30 is increased to the predetermined temperature, causing the insulating layer 32 to be melted (for example, at a temperature exceeding 88 degrees), and allowing the pair of conductive wires 31 to have electrical contact. Subsequently, the two conductive wires 31 are connected to generate a conduction signal. Once the conduction signal is transmitted to the control board 41, the alarm 42 is activated to generate a warning signal. Thus, user may be alerted by the high temperature state of the battery module 1 through this warning signal to take corresponding protective measures.

It should be noted that since the temperature-sensing line 30 surrounds and contacts all the battery cells 10, the conductive wires 31 is being conducted when the temperature of any battery cell 10 exceeds the predetermined temperature, thereby activating the alarm 42.

Furthermore, the temperature-sensing line 30 may be set with a predetermined temperature by selecting the material of the insulating layer 32, and this predetermined temperature is lower than the critical temperature of the battery cells 10. Consequently, before the temperature of any battery cell 10 reaches the critical level, the insulating layer 32 is melted, allowing the pair of conductive wires 31 to generate a conduction signal. Accordingly, the temperature-sensing line 30 may generate a conduction signal before any battery cell 10 reaches its critical temperature. Through this conduction signal, the control board 41 may make the alarm 42 generate a warning signal to notify the user to take appropriate measures to prevent damage to the battery cells 10 caused by high temperatures.

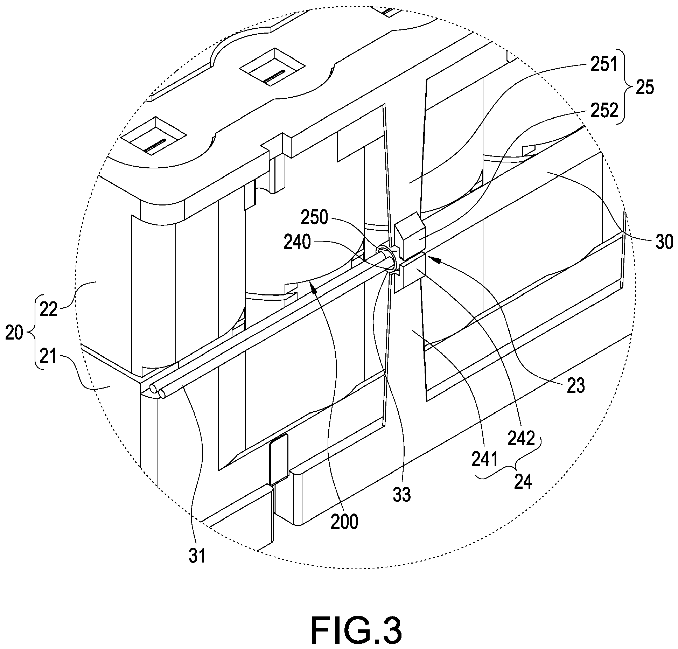

Please further refer to FIG. 3, which illustrates an enlarged schematic view of the battery module 1 with temperature sensing structure in this disclosure at the circled area in FIG. 1. As shown in FIG. 3, the housing 20 includes a plurality of fixing structures 23 designed to secure the temperature-sensing line 30. The fixing structures 23 include a plurality of lower fixing structure 24 located on the base 21 and a plurality of upper fixing structure 25 located on the cover 22. The lower fixing structure 24 extends from the base 21 to the hollow portion 200, and the upper fixing structure 25 extends from the cover 22 to the hollow portion 200. The lower fixing structure 24 and the upper fixing structure 25 secure the temperature-sensing line 30 within the hollow portion 200. In this embodiment, the lower fixing structure 24, which is located on the base 21, is disposed correspond to the upper fixing structure 25, which is located on the cover 22.

Please further refer to FIG. 3, the lower fixing structure 24 includes a lower extension arm 241 extending upwardly from the base 21 and a lower block 242 located on the lower extension arm 241. A lower groove 240 is defined on the lower block 242 to secure the temperature-sensing line 30 in place. Similarly, the upper fixing structure 25 includes an upper extension arm 251 extending downwardly from the cover 22 and an upper block 252 located on the upper extension arm 251. An upper groove 250 is defined on the upper block 252 to secure the temperature-sensing line 30. The lower fixing structure 24, which is located on the base 21, is arranged corresponding to the upper fixing structure 25, which is located on the cover 22, to be engaged with the upper and lower sides of the temperature-sensing line 30.

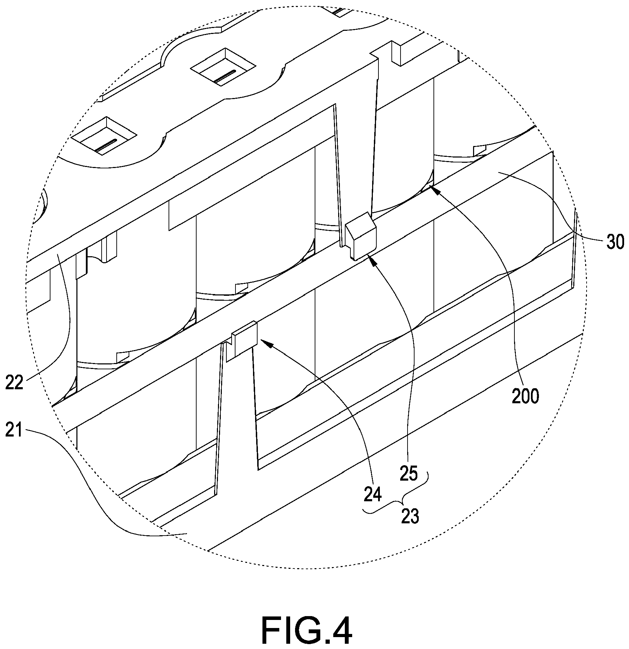

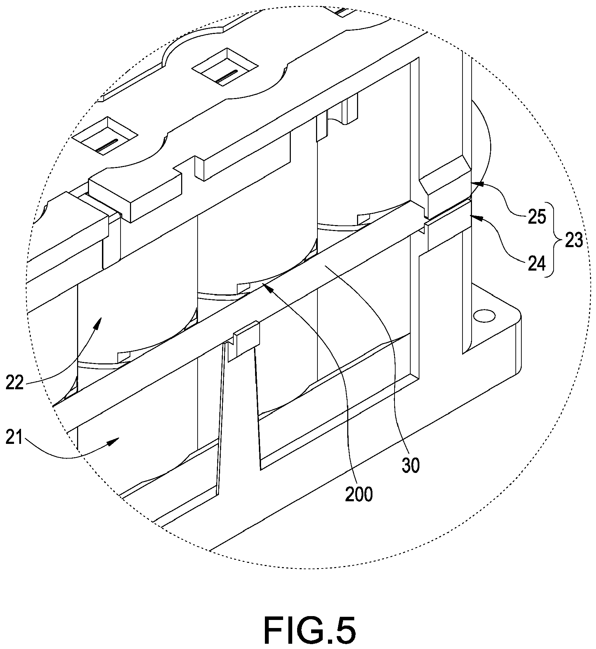

FIG. 4 illustrates a partially enlarged schematic view of the battery module 1 with temperature sensing structure in this disclosure, showing another embodiment. In contrast to FIG. 3, FIG.4 depicts that the lower fixing structure 24 and the upper fixing structure 25 are arranged in a staggered manner to be engaged with the lower and upper sides of the temperature-sensing line 30, respectively. FIG.5 illustrates that the lower fixing structure 24, which is located on the base, is arranged corresponding to the upper fixing structure 25, which is located on the cover 22, to clamp the temperature sensing line 30. Accordingly, the temperature-sensing line 30 is positioned within the hollow portion 200 through the fixing structures 23 located at different positions on the base 21 and the cover 22.

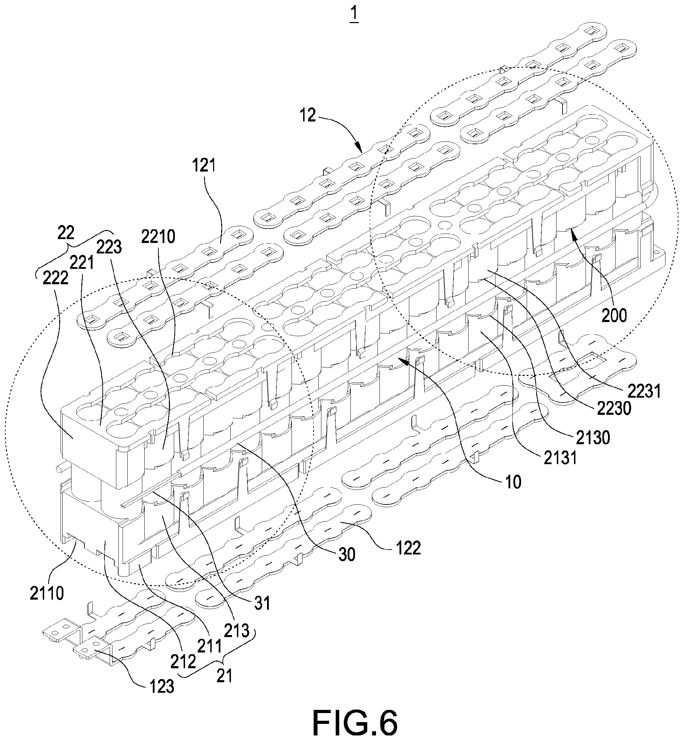

FIG. 6 depicts a perspective exploded schematic view of the battery module with temperature sensing structures in this disclosure. As shown in FIG. 6, the battery module 1 further includes a plurality of busbars 12 electrically connected with the battery cells 10. The battery cells 10 may be, but are not limited to, cylindrical batteries of 26650, 4680 or 18650 models. The battery cells 10 are arranged in a matrix manner and are clamped and positioned by the base 21 and the cover 22.

The busbars 12 includes a plurality of first electrode plates 121 and a plurality of second electrode plates 122. Taking the example of electrically connecting a cylindrical battery, the first electrode plates 121 and the second electrode plates 122 are respectively disposed on two sides of the battery cells 10 opposite to each other. The first electrode plates 121 are positioned through the cover 22 and electrically connected to the electrodes above the battery cells 10. The second electrode plates 122 are positioned through the base 21 and electrically connected to the electrodes below the battery cells 10.

Please further refer to FIG. 6, the cover 22 includes a cover plate 221, a pair of upper side-plates 222, and an upper positioning plate 223. A plurality of upper slots 2210 are defined on the cover plate 221. The pair of upper side-plates 222 are located on two sides of the cover plate 221 opposite to each other. The upper positioning plate 223 is located between the cover plate 221 and the pair of upper side-plates 222, outline of the upper positioning plate 223 is corresponding to that of the batter cells 10. The first electrode plates 121 are in contact with and electrically connected to the electrodes above the battery cells 10, and each of the first electrode plate 121 is mounted in the upper slot 2210. The base 21 includes a base plate 211, a pair of lower side-plates 212, and a lower positioning plate 213. Alower slot 2110 is defined on the base plate 211. The pair of lower side-plates 212 are located on two sides of the base plate 211 opposite to each other. The lower positioning plate 213 is located between the base plate 211 and the pair of lower side-plates 212, outline of the lower positioning plate 213 is corresponding to that of the battery cells 10. The second electrode plates 122 are in contact with and electrically connected to the electrodes below the battery cells 10, and each of the second electrode plates 122 is mounted in the upper slot 2210.

Please further refer to FIG. 6, the hollow portion 200 is defined when the base 21 is combined with the cover 22. The hollow portion 200 is located between the upper edge of the lower positioning plate 213 and the lower edge of the upper positioning plate 223. The upper positioning plate 223 includes a plurality of upper arc plates 2231 disposed corresponding to the positions of the battery cells 10. An upper notch 2230 is defined on the upper edge of each of the upper arc plates 2231. Similarly, the lower positioning plate 213 includes a plurality of lower arc plates 2131 disposed corresponding to the positions of the battery cells 10. A lower notch 2130 is defined on the lower edge of each of the lower arc plates 2131. The hollow portion 200 is formed by the combination of the lower notch 2130 and the upper notch 2230 when the base 21 and the cover 22 are combined. A part of the outer periphery of each of the battery cells 10 is exposed from the hollow portion 200. The temperature-sensing line 30 contacts the outer periphery of each of the battery cells 10 exposed from the hollow portion 200. Additionally, the conductive wire 31 in the temperature sensing wire 30 are used to be connected to the control board 41.

A pair of output terminals 123 are positioned on the second electrode plates 122. The battery cells 10 output power through the pair of output terminals 123.

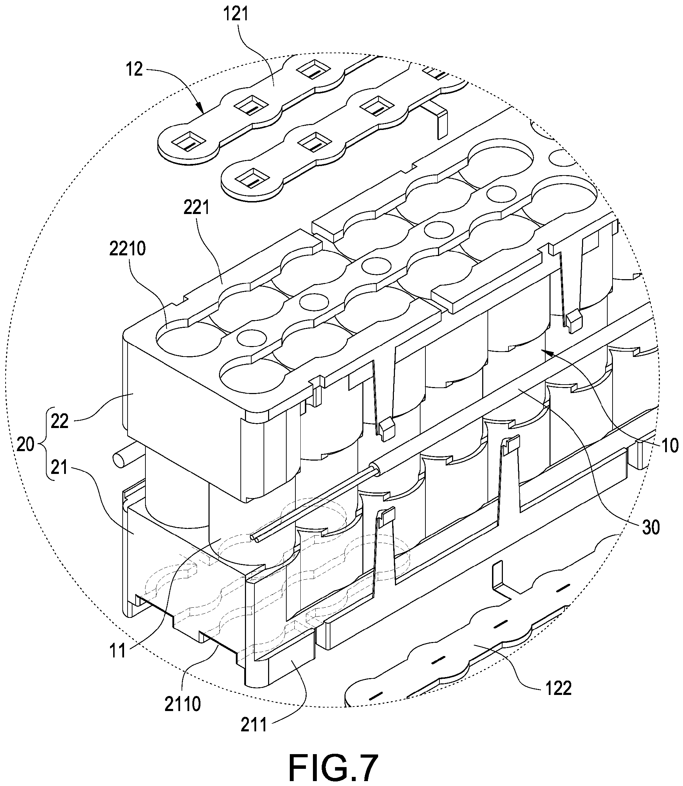

FIG. 7 illustrates a partially enlarged view of the perspective exploded schematic view of the battery module with temperature sensing structures in this disclosure, focusing on the circled area on the left side of FIG. 6. As depicted in FIG. 7, a plurality of battery cells 10 are placed in the housing 20. The housing 20 includes a base 21 and a cover 22 combined together. The busbars 12 include multiple first electrode plates 121 and second electrode plates 122 arranged on two sides of the housing 20 opposite to each other. A plurality of upper slots 2210 are defined on the cover plate 221, allowing the first electrode plates 121 to be in contact with and electrically connected to the electrodes above the battery cells 10. Similarly, the second electrode plates 122 are in contact with and electrically connected to the electrodes below the battery cells 10, and each of the second electrode plate 122 is mounted in the lower slot 2110.

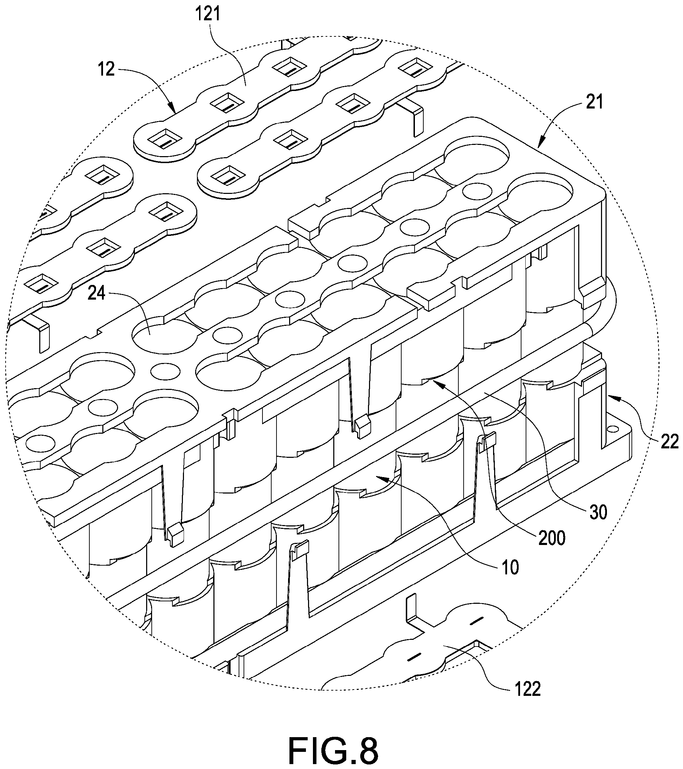

Please refer to FIG. 8, which illustrates a partially enlarged view of the perspective exploded schematic view of the battery module with temperature sensing structures in this disclosure. As depicted in FIG. 8, the busbars 12 includes multiple first electrode plates 121 and multiple second electrode plates 122. The first electrode plates 121 are positioned on the cover 22, and the second electrode plates 122 are positioned on the base 21. The temperature-sensing wire 30 is arranged within the hollow portion 200 and surrounds the battery cells 10. It is noteworthy that the temperature-sensing line 30 contacts the outer periphery of each of the battery cells 10 exposed from the hollow portion 200.

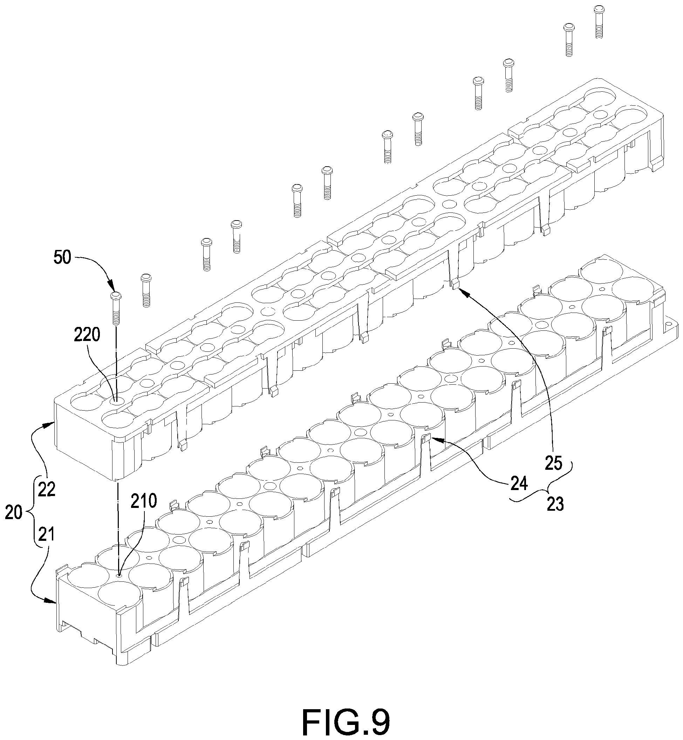

Please also refer to FIG. 9, which illustrates a perspective exploded schematic view of the housing in this disclosure. In this embodiment, the fixing structures 23 include a plurality of lower fixing structures 24 located on the base 21 and a plurality of upper fixing structures 25 located on the cover 22. The lower fixing structures 24 are separately arranged on the outer periphery of the base 21. The upper fixing structures 25 are separately arranged on the outer periphery of the cover 22. Moreover, the battery module 1 further includes a plurality of locking parts 50. Each of the locking parts 50 is, but not limited to, a screw. Additionally, a plurality of locking holes 210 are separately arranged on the base 21, and a plurality of through holes 220 are separately arranged on the cover 22. The locking parts 50 are respectively inserted in the through holes 220 and secured in place by the locking holes 210. Consequently, the base 21 and the cover 22 are combined through the locking parts 50.

## Claims

1. A battery module (1), comprising:
a plurality of battery cells (10);
a housing (20), comprising a base (21) and a cover (22), wherein a hollow portion (200) is defined between the base (21) and the cover (22), the battery cells (10) are fixed by the base (21) and the cover (22), and a part of an outer periphery of each of the battery cells (10) is exposed from the hollow portion (200); and
a temperature-sensing line (30), comprising a pair of conductive wires (31) and an insulating layer (32) disposed between the pair of conductive wires (31), and contacting the outer periphery of each of the battery cells (10) exposed from the hollow portion (200);
wherein, when a temperature of at least one of the battery cells (10) is increased to a predetermined temperature and a heat is transmitted to the temperature-sensing line (30), the insulating layer (32) is melted at the predetermined temperature to make the pair of conductive wires (31) conduct with each other and generate a warning signal.

2. The battery module according to claim 1, further comprising a control module (40), wherein the control module (40) comprises a control board (41) and an alarm (42) electrically connected to the control board (41), one ends of the pair of conductive wires (31) are connected to the control board (41), and the alarm (42) is configured to generate the warning signal.

3. The battery module according to claim 1, further comprising a plurality of busbars (12) electrically connected the battery cells (10), wherein the battery cells (10) are arranged in a matrix manner, the busbars (12) comprise a first electrode plate (121) and a second electrode plate (122), and the first electrode plate (121) and the second electrode plate (122) are respectively arranged on two sides of the battery cells (10) opposite to each other.

4. The battery module according to claim 1, wherein the housing (20) comprises a plurality of fixing structures (23) configured to secure the temperature-sensing line (30), the fixing structure (23) comprises a lower fixing structure (24) located on the base (21) and an upper fixing structure (25) located on the cover (22), the lower fixing structure (24) extends from the base (21) to the hollow portion (200), and the upper fixing structure (25) extends from the cover (22) to the hollow portion (200).

5. The battery module according to claim 4, wherein the lower fixing structure (24) comprises a lower extension arm extending (241) from the base (21) and a lower block (242) located on the lower extension arm (241), a lower groove (240) is defined on the lower block (242) engaged with the temperature-sensing line (30); and
the upper fixing structure (25) comprises an upper extension arm (251) extending from the cover (22) and an upper block (252) located on the upper extension arm (251), and an upper groove (250) is defined on the upper block (252) engaged with the temperature-sensing line (30).

6. The battery module according to claim 4, wherein the lower fixing structure (24) is arranged corresponding to the upper fixing structure (25) to be engaged with the temperature-sensing line (30).

7. The battery module according to claim 4, wherein the lower fixing structure (24) and the upper fixing structure (25) are arranged in a staggered manner to be separately engaged with the temperature-sensing line (30).

8. The battery module according to claim 1, wherein the cover (22) comprises a cover plate (221), a pair of upper side-plates (222) and an upper positioning plate (223), an upper slot (2210) is defined on the cover plate, the pair of upper side-plates (222) are located on two sides of the cover (22) opposite to each other, the upper positioning plate (223) is located between the cover plate (221) and the pair of upper side-plates (222) and disposed corresponding to outlines of the batter cells (10); and
the base (21) comprises a base plate (212), a pair of lower side-plates (212) and a lower positioning plate (213), a lower slot (2110) is defined on the base plate (211), the pair of lower side-plates (212) are located on two sides of the base (21) opposite to each other, the lower positioning plate (213) is located between the base plate (211) and the pair of lower side-plates (212) and disposed corresponding to outlines of the battery cells (10).

9. The battery module according to claim 8, wherein the lower positioning plate (213) comprises a plurality of lower arc plates (2131) corresponding to the battery cells (10), a lower notch (2130) is defined on an upper edge of each of the lower arc plates (2131); the upper positioning plate (223) comprises a plurality of upper arc plates (2231) corresponding to the battery cells (10), an upper notch (2230) is defined on an upper edge of each of the upper arc plates, the hollow portion is defined between the lower notch (2130) and the upper notch (2230) when the base (21) and the cover (22) are combined.

10. The battery module according to claim 1, wherein the temperature-sensing line (30) further comprises a protection sheath (33), the pair of conductive wires (31) is inserted in the protection sheath (33), each of the pair of conductive wires (31) is covered with the insulating layer (32) and contacts the protection sheath (33) through the insulating layer (32).

11. The battery module according to claim 1, wherein the insulating layer (32) is made of thermosensitive polymer, and each of the conductive wire (31) is made of copper.

12. The battery module according to claim 1, further comprising a plurality of locking parts (50), wherein the base (21) and the cover (22) are combined through the locking parts (50).

13. The battery module according to claim 12, wherein a plurality of locking holes are separately defined on the base (21), a plurality of through holes (220) are separately defined on the cover (22), and the locking parts (50) are inserted in the through holes (220) and combined in the locking holes (210).
